# EUROPEAN PATENT SPECIFICATION

(11) **EP 1 655 326 B1**
(45) Date of publication and mention of the grant of the patent: **28.03.2012**
(21) Application number: 04026480.6
(22) Date of filing: 08.11.2004
(51) Int. Cl.: C08J 9/04, C08J 9/36

(54) **Crosslinked polymer foam sheet and process therefor**
Vernetzte Polymerschaumstoffplatte und Herstellungsverfahren
Plaque de mousse réticulée et son procédé de préparation

(43) Date of publication of application: 10.05.2006
(73) Proprietor: Sekisui Alveo AG, 6003 Luzern (CH)
(72) Inventor: Weinbeck, Alexandra Emanuela, 5235 GM s'Hertogenbosch (NL); Willemse, Remco Cornelis, 6004 DA Weert (NL)
(74) Representative: Strehl Schübel-Hopf & Partner

(56) References cited:
- EP-A- 0 483 682
- GB-A- 1 052 289
- GB-A- 1 079 369

## Description

### Field of the Invention

The present invention relates to a process for the production of a crosslinked polymer foam, a crosslinked polymer foam obtainable by said process and the use of said crosslinked polymer foams.

### Background Art

From the literature (e.g. Klemper/Frisch; Polymeric foams; Hanser Publishers, 1991, chapter 9) it is known that crosslinked polyolefin foams can be obtained via chemical crosslinking and radiation crosslinking. Both routes consist of the following steps:
- mixing the polymers with 1. a chemical blowing agent (radiation crosslinking or 2. a chemical blowing agent and a crosslinking agent, e.g. a peroxide or silane;
- extruding a sheet;
- in case of radiation crosslinking: crosslinking the extruded sheet;
- heating the sheet in a oven leading to:
   o decomposition of the peroxide in case of chemical crosslinking followed by the crosslinking of the polymer;
   o decomposition of the chemical blowing agent leading to the foam.

From the literature (e.g. Klemper/Frisch; Polymeric foams; Hanser Publishers, 1991, chapter 9) it is also known. that the suitable chemical blowing agent for these processes are exothermic foaming agents like azodicarbonamide, N,N'-Dinitrosopentamethylenetetramine, or 4,4-Oxybis (benzenesulfonylhydrazide). It is also mentioned that endothermic blowing agents, like sodiumbicarbonate is unsuitable since it begins to decompose at temperatures below the melting temperature of most polyolefins and its decomposition temperature range is undesirably broad. Moreover its decomposition products, carbondioxide and water, diffuse through the polyolefines much faster than air, causing unwanted foam shrinkage. Mixtures of sodium bicarbonate and citric acid are used as nucleators for direct extrusion blowing process of low density plastic foam and as blowing agents in structural foams having densities above 300 kg/m3.

US3711584 describes a wrinkle-free highly foamed sheet of a polyolefin resin having a fine and uniform cellular structure. This foamed sheet was obtained by foaming a void-free crosslinked sheet at temperatures above the decomposition temperature of the chemical blowing agent, azodicarbonamide. This crosslinked sheet can be obtained by radiation curing or by chemical crosslinking of the sheet. For chemical crosslinking an organic peroxide is required having a decomposition temperature below the decomposition temperature of the blowing agent.

EP0329490 describes a chemically crosslinked polyolefin foam in which the chemical blowing agent is selected from the group consisting of azodicarbonamide, dinitropentamethylenetetramine, diphenyl,-4,4-disulfonylamide and p,p oxybis-benzolsulfonesemicarbazide.

EP0704476 describes a crosslinked plastic foam material composed of a polyolefin based resin composition consisting of polypropylene and polyethylene based polymers. The foamable material includes a thermodecomposable foaming agent, being azodicarbonamide or selected from the group consisting 1,1 azobisformamide, benzene sulfonyl hydrazide, dinotrosopentamethylene tetramine, toluene sulfonyl hydrazide, and 4,4-oxybis (benzene sulfonyl hydrazide).

In GB 1079369 a partially crosslinked polymer foam is described which is prepared by adding a foamable composition comprising the polymer and the foaming agent to an extruder and extruding after heating the mixture as a sheet or tube. Typical foaming agents are organic compounds which decompose to give nitrogen or mixtures of alkali or alkaline earth metal carbonates or bicarbonates and an acidic agent which liberate carbon dioxide, e.g. sodium bicarbonate and citric acid.

In GB 1111928 foamed polypropylene is described, which is prepared by feeding polypropylene and a nucleating agent containing a CO₂ liberating component and an acid to the transport zone of an extruder, injecting and mixing an organic foaming agent into the plastic mass in the extruder and extruding the mixture with formation of the foam. The nucleating agent consists preferably of a mixture of sodium bicarbonate and citric acid.

In the patents EP 0461298, US 5443769, US 5674602 and US 5925450 foamed products of polystyrene, e.g. plates, cups and food containers, are described, which are produced by extruding a molten polystyrene resin containing nucleating agents such as sodium bicarbonate and citric acid, and adding gases as blowing agents.

EP 0483 682 A2 discloses a process for producing a plastic foam made by foaming a resin composition containing a propylene-based unsaturated copolymer resin obtained by random copolymerisation of propylene, ethylene and a specific non-conjugated diene, and foams thereof. A number of foaming agents for producing the foam is listed.

US 1,052,289 discloses fiber-filled foamed articles containing a thermoplastic polymer. Before producing the foam a nucleating agent, e.g. citric acid and sodium bicarbonate, in low amounts is incorporated into the foamable composition. Additionally, foaming agents are incorporated.

### Problem to be Solved by the Invention

The technical problem underlying the present invention was to provide a process for the production of crosslinked polymer foams using foaming agents that do not result in the presence of semicarbazide in the foamed product.

### Summary of the Invention

The inventors have discovered a process to solve the above problem. In particular, the present invention provides the following process:
A process for the production of a crosslinked polymer foam, which comprises the following steps:
   (i) blending a polymer with a blowing agent,
   (ii) forming the blend into a sheet,
   (iii) crosslinking the sheet, and
   (iv) foaming the sheet,
wherein the blowing agent is blended in an amount of 3 to 25 %, based on the total weight of the polymer and the blowing agent, and is composed of
(A) 3 to 50 % of one or more inorganic carbonates and
(B) 50 to 97 % of one or more compounds selected from the group consisting of polycarboxylic acids, salts thereof, and derivatives thereof.

Furthermore, the present invention provides the following process:

A process for the production of a crosslinked polyolefin foam, which comprises the following steps:
(i) blending a polyolefin with a blowing agent,
(ii) forming the blend into a sheet,
(iii) crosslinking the sheet, and
(iv) foaming the sheet,
wherein the blowing agent is composed of
(A) 5 to 40 % of one or more inorganic carbonates,
(B1) 10 to 60 % of one or more polycarboxylic acids and/or salts thereof, and
(B2) 10 to 60 % of one or more derivatives of polycarboxylic acids.

The preferred embodiments of the invention are defined in the dependent claims.

The invention furthermore provides a crosslinked polymer foam obtainable by a process of the invention.

Furthermore, the present invention provides the use of the crosslinked polymer foam of the invention for packaging or sealing food, beverage containers, medical devices, pharmaceuticals and cosmetics, or as a carrier for transdermal applications of medicine or as a plaster.

The polymer foams obtained by the processes according to the invention have the following advantages :
- they do not contain semicarbazide traces normally found in polymer foams blown with azodicarbonamide;
- they fullfill the new requirements of the European Food Packaging legislation, which demands, that polymer foams have to be blown without Azodicarbonamide;
- they have a very pronounced white colour as compared to the foams produced with azodicarbonamide;
- they have a density between 20 and 400 kg/m3, preferably 50 an 300 kg/m3;
- they have a cell size between 0.05 and 2 mm, preferably between 0.1-0.6 mm;
- they show no shrinking after the foaming process.

Since the processes of the invention do not require azodicarbonamides, the foams obtained by a process of the invention have the advantage that they do not contain semicarbazides.

The crosslinked foams has finer closed cells and smoother surfaces as compared to direct extruded non-xl polyolefin foams.

### Brief Description of the Figure

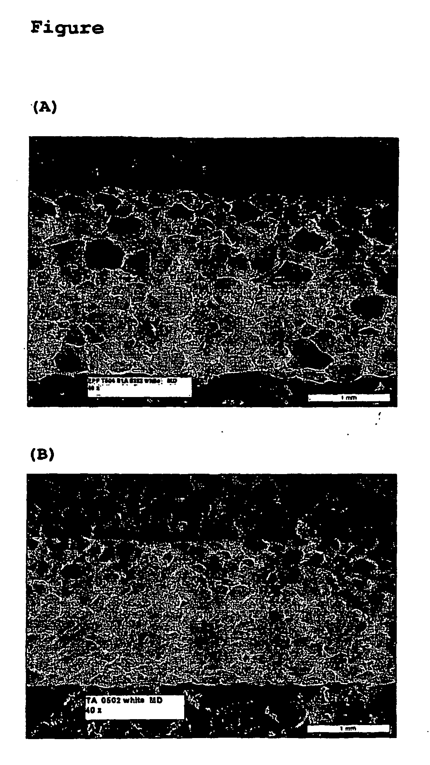

Figure 1 (A) shows a foam produced by using a mixture of sodium bicarbonate and a citric acid derivative as a blowing agent (white bar represents 1 mm).
Figure 1 (B) shows a foam produced by using azodicarbonamide as blowing agent (white bar represents 1 mm) .

### Detailed Description of the Invention

The polymers that can be used in the process of present invention include Polyolefins, like Polyethylene (LDPE, LLDPE, VLLDPE, HDPE, Metallocene PE), Polypropylene (Homo- and Copolymers) and Olefin-Copolymers (EBA, EMA, EVA) and mixtures thereof and additionally PVC and Polystyrene. Furthermore, the polymers include all polymers having a melting temperature of 130 °C or less.

The blowing agent used in the process of the invention include inorganic carbonates, like sodium bicarbonate, sodium aluminium hydroxyl carbonate, magnesium carbonate and mixtures thereof and polycarboxylic acids or salts thereof, such as citric acid, fumaric acid, tartaric acid, sodium hydrogen citrate and disodium citrate and mixtures thereof and additionally mixtures of both groups, carbonates and acids, which are normally not suitable for the production of expanded synthetic polymers, especially if the expansion degree is higher then 3 times.

The density of the obtained polymer foam is measured according to Method ISO 845. Advantageously, the density is from 20 kg/m³ to 400 kg/m³.

The cell size is preferably from 0.05 to 2.0 mm, more preferably from 0.1 mm to 0.6 mm. Advantageously, the cells are closed.

In a preferred embodiment, the temperature of extruding, kneading or calendaring the polymer blend into a sheet is 130 °C or less to prevent the sheet from prefoaming, to get a regular cell structure and a flat foam surface.

The foaming is carried out preferably at a temperature of 180 to 260 °C, more preferably at a temperature of 200 to 240 °C.

The amount of the foaming agent used is preferably 3 to 25 %, more preferably 4 to 20 %.

The crosslinking may be carried out by any known method, in particular by radiation, either by electron beam or gamma ray.

The production of the fine-cell crosslinked foam using e.g. sodium bicarbonate and citric acid as blowing agent can be done by a multi-step process; which means
1) mixing/extruding or mixing/kneading or mixing/calendering a polymer matrix sheet
2) crosslinking by
   a) radiation source, like electron beam or gamma ray (Cobalt60)
   b) chemical crosslinking agents, like organic peroxids
3) foaming
   a) in a vertical or horizontal oven system
   b) in a impregnation process with nitrogen in a autoclave, followed by a free foaming in a oven system.

As regards the process to make a roll or batch foam, the following steps are advantageous .
A. Roll foams:
   1) Extruding/kneading:
      Mixing/extruding and/or mixing/kneading/calendering as a film or a sheet, with or without cutting off the sheet.
   2) Crosslinking:
      Physical crosslinking: by electron beam or gamma irradiation.
   3) Foaming:
      Through decomposition of an organic blowing agent added during the mixing phase, being a mixture of sodium bicarbonate and citric acid.
   4) Expansion process:
      a) In a horizontal oven with free expansion.
      b) In a vertical oven with free expansion.
B. Batch foams
   1. Mixing/kneading/calendering the polymer with a peroxide as a crosslinking agent and a mixture of sodium bicarbonate and citric acid as blowing agent to a sheet or felt and cutting to size.
   2. Foaming/Shaping in a heated press, both chemical crosslinking due to decomposition of the peroxide and foaming to a raw bun due to the decomposition of sodiumbicarbonate/citric acid will occur.

### Examples

### Comparative Example 1:

### Sodium bicarbonate as blowing agent

A commercial low density polyethylene is mixed with 5 % sodium bicarbonate (e.g. Genitron KA9175) in an extruder at a temperature of 125°C (melt temperature above 130°C). After extrusion the sheet is crosslinked by radiation and foamed in an oven at 240°C. A foam with a density of 165 kg/m³ is obtained.
By varying the amount of the foaming agent foams with a density varying between 150 and 400 kg/m³ were obtained. All foams were coarse cell foams, since foaming partially occurred in the extruder. Due to this so-called prefoaming coarse cells and irregular surfaces are obtained.

### Comparative Example 2:

### Derivatives of citric acid as blowing agent

A commercial low density polyethylene is mixed with 9% citric acid (e.g. Hydrocerol 534 or Hydrocerol PEX 5012) in an extruder at a temperature of 125°C (melt temperature above 130°C). After extrusion the sheet is crosslinked by radiation and foamed in an oven at 200-240°C. A foam with a density of 200kg/m³ is obtained. By varying the amount of the foaming agent foams with a density varying between 200 and 400 kg/m³ were obtained. Lower densities were not obtained. Fine cell foams were formed. Unfortunately pin holes and surface blisters were formed.

### Example 3:

### Mixtures of sodium bicarbonate and citric acid and its derivatives

3a (Comparative). A commercial low density polyethylene resin is mixed with 6% of a mixture of sodium bicarbonate and a citric acid (e.g. Celenex 3P6) in an extruder at a temperature of 125°C (melt temperature above 135°C). After extrusion the sheet is crosslinked by radiation and foamed in an oven at 200-240°C. A foam with a density of 300kg/m³ is obtained. Increasing the amount of foaming agent led to decomposition of the blowing agent in the extruder. Rough foam surfaces and coarse cells were seen.
3b. A commercial low density polyethylene resin is mixed with 5% of a mixture of sodium bicarbonate and a citric acid derivative (e.g. Tracel INC 7200W) in an extruder at a temperature of 125°C (melt temperature above 135°C). After extrusion the sheet is crosslinked by radiation and foamed in an oven at 220-260°C. A foam with a density of 200kg/m³ is obtained. Fine cells and a smooth surface was seen.
3c. A commercial low density polyethylene is mixed with 10% of a mixture of sodium bicarbonate and a citric acid derivative (e.g. Tracel INC 7200W) in an extruder at a temperature of 125°C (melt temperature above 135°C). After extrusion the sheet is crosslinked by radiation and foamed in an oven at 190-230 °C. A foam with a density of 125kg/m³ is obtained. Fine cells and a smooth surface was seen.
3d. A commercial low density polyethylene is mixed with 10% of a mixture of sodium bicarbonate and a citric acid derivative (e.g. Tracel INC 7200W) in an extruder at a temperature of 125°C (melt temperature above 135°C). After extrusion the sheet is crosslinked by radiation and foamed in an oven at 220-260°C during at least 5 minutes. A foam with a density of 80 kg/m³ is obtained. Fine cells and a smooth surface was seen.
3e. A commercial low density polyethylene is mixed with 5% of a mixture of sodium bicarbonate and a citric acid derivative (e.g. Tracel NCS 175) in an extruder at a temperature of 125°C (melt temperature above 135°C). After extrusion the sheet is crosslinked by radiation and foamed in a laboratory oven at 220-260°C. A foam with a density of 300 kg/m³ is obtained. Fine cells and a smooth surface was seen.
3f. A commercial low density polyethylene is mixed with 10% of a mixture of sodium bicarbonate and a citric acid derivative (e.g. Tracel NCS 175) in an extruder at a temperature of 125°C (melt temperature above 135°C). After extrusion the sheet is crosslinked by radiation and foamed in an oven at 220-260°C. A foam with a density of 200 kg/m³ is obtained. Fine cells and a smooth surface was seen.
3g. A commercial low density polyethylene is mixed with 5% of a mixture of sodium bicarbonate and a citric acid derivative (e.g. Tracel NCS 175) in an extruder at a temperature of 125°C (melt temperature above 135°C). After extrusion the sheet is crosslinked by radiation and foamed in an oven at 220-260°C. A foam with a density of 125 kg/m³ is obtained. Fine cells and a smooth surface was seen. In Figure 1 a comparison is shown of this foam and a foam produced by using azodicarbonamide. The cells in the foam produced with Tracel NCS 175 are coarser than in case of foams produced by using azodicarbonamide. The sizes of the cells are less than 0.7 mm, varying between 0.1 and 0.7 mm.

## Claims

1. A process for the production of a crosslinked polymer foam, which comprises the following steps:
(i) blending a polymer with a blowing agent,
(ii) forming the blend into a sheet,
(iii) crosslinking the sheet, and
(iv) foaming the sheet,
therein the blowing agent is blended in an amount of 3 to 25 %, based on the total weight of the polymer and the blowing agent, and is composed of
(A) 5 to 40 % of one or more inorganic carbonates,
(B1) 10 to 60 % of one or more polycarboxylic acids and/or salts thereof, and
(B2) 10 to 60 % of one or more derivatives of polycarboxylic acids.

2. A process for the production of a crosslinked polyolefin foam, which comprises the following steps:
(i) blending a polyolefin with a blowing agent,
(ii) forming the blend into a sheet,
(iii) crosslinking the sheet, and
(iv) foaming the sheet,
wherein the blowing agent is composed of
(A) 5 to 40 % of one or more inorganic carbonates,
(B1) 10 to 60 % of one or more polycarboxylic acids and/or salts thereof, and
(B2) 10 to 60 % of one or more derivatives of polycarboxylic acids.

3. The process according to claim 2, wherein components (A), (B1) and (B2) are blended with the polyolefin in an amount of 3 to 25 %, based on the total weight of the polymer and the blowing agent.

4. The process according to any one of claims 1 to 3, wherein the polymer is selected from the group consisting of polymers having a melting temperature of 130 °C or less and polyolefins.

5. The process according to claim 4, wherein the polyolefin is selected from the group consisting of polyethylene and ethylene-copolymers.

6. The process according to any one of the preceding claims, wherein the blend is formed by extruding, kneading or calendering the blend into a sheet at a temperature of 130 °C or less.

7. The process according to any one of the preceding claims, wherein the foaming is carried out at a temperature of 180 to 260 °C.

8. The process according to any one of the preceding claims, wherein the components of the blowing agent are blended with the polyolefin separately or as a mixture.

9. The process according to any one of the preceding claims, wherein the inorganic carbonates are selected from sodium bicarbonate, sodium aluminium hydroxyl carbonate, and magnesium carbonate.

10. The process according to any one of the preceding claims, wherein the polycarboxylic acids and salts thereof are selected from citric acid, fumaric acid, tartaric acid, sodium hydrogen citrate, disodium citrate and trisodium citrate.

11. The process according to any one of the preceding claims, wherein the derivatives of polycarboxylic acids are selected from esters, amides, halides, and anhydrides.

12. The process according to any one of the preceding claims, wherein the blowing agent is blended in an amount of 4 to 20 %.

13. A crosslinked polymer foam obtainable by a method as defined in any one of claims 1 to 12.

14. The crosslinked polymer foam according to claim 13 which is free of semicarbazides.

15. The crosslinked polymer foam according to claim 13 or 14 having a density of 20 to 400 kg/m3.

16. The crosslinked polymer foam according to any one of claims 13 to 15 having cell sizes of 0.05 to 2 mm.

17. Use of the crosslinked polymer foam according to anyone of claims 13-16 for packaging or sealing products.

## Patentansprüche

1. Verfahren zur Herstellung eines vernetzten Polymerschaums, mit den folgenden Schritten:
(i) Mischen eines Polymers mit einem Treibmittel,
(ii) Formen des Gemischs zu einer Bahn,
(iii) Vernetzen der Bahn, und
(iv) Schäumen der Bahn,
worin das Treibmittel in einer Menge von 3 bis 25 % zugemischt wird, bezogen auf das Gesamtgewicht des Polymers und des Treibmittels, und enthält:
(A) 5 bis 40 % eines oder mehrerer anorganischer Carbonate,
(B1) 10 bis 60 % einer oder mehrerer Polycarbonsäuren und/oder Salzen davon, und
(B2) 10 bis 60 % eines oder mehrerer Polycarbonsäurederivate.

2. Verfahren zur Herstellung eines vernetzten Polyolefinschaums, mit den folgenden Schritten:
(i) Mischen eines Polyolefins mit einem Treibmittel,
(ii) Formen des Gemischs zu einer Bahn,
(iii) Vernetzen der Bahn, und
(iv) Schäumen der Bahn,
worin das Treibmittel enthält:
(A) 5 bis 40 % eines oder mehrerer anorganischer Carbonate,
(B1) 10 bis 60 % einer oder mehrerer Polycarbonsäuren und/oder Salzen davon, und
(B2) 10 bis 60 % eines oder mehrerer Polycarbonsäurederivate.

3. Verfahren nach Anspruch 2, wobei die Komponenten (A), (B1) und (B2) mit dem Polyolefin in einer Menge von 3 bis 25 % vermischt werden, bezogen auf das Gesamtgewicht des Polymers und des Treibmittels.

4. Verfahren nach einem der Ansprüche 1 bis 3, wobei das Polymer aus der Gruppe ausgewählt ist, die aus Polymeren mit einer Schmelztemperatur von 130°C oder weniger und Polyolefinen besteht.

5. Verfahren nach Anspruch 4, wobei das Polyolefin aus der Gruppe ausgewählt ist, welche aus Polyethylen und Ethylen-Copolymeren besteht.

6. Verfahren nach einem der vorhergehenden Ansprüche, wobei das Gemisch durch Extrudieren, Verkneten oder Kalandern des Gemischs bei einer Temperatur von 130°C oder weniger zu einer Bahn geformt wird.

7. Verfahren nach einem der vorhergehenden Ansprüche, wobei das Schäumen bei einer Temperatur von 180 bis 260°C durchgeführt wird.

8. Verfahren nach einem der vorhergehenden Ansprüche, wobei die Komponenten des Treibmittels separat oder als ein Gemisch mit dem Polyolefin vermischt werden.

9. Verfahren nach einem der vorhergehenden Ansprüche, wobei die anorganischen Carbonate aus Natriumbicarbonat, Natriumaluminiumhydroxylcarbonat und Magnesiumcarbonat ausgewählt werden.

10. Verfahren nach einem der vorhergehenden Ansprüche, wobei die Polycarbonsäuren und Salze davon aus Zitronensäure, Fumarsäure, Weinsäure, Natriumhydrogencitrat, Dinatriumcitrat und Trinatriumcitrat ausgewählt werden.

11. Verfahren nach einem der vorhergehenden Ansprüche, wobei die Derivate von Polycarbonsäuren aus Estern, Amiden, Halogeniden und Anhydriden ausgewählt werden.

12. Verfahren nach einem der vorhergehenden Ansprüche, wobei das Treibmittel in einer Menge von 4 bis 20 % zugemischt wird.

13. Vernetzter Polymerschaum, erhältlich durch ein Verfahren nach einem der Ansprüche 1 bis 12.

14. Vernetzter Polymerschaum nach Anspruch 13, wobei dieser frei von Semicarbaziden ist.

15. Vernetzter Polymerschaum nach Anspruch 13 oder 14, mit einer Dichte von 20 bis 400 kg/m³.

16. Vernetzter Polymerschaum nach einem der Ansprüche 13 bis 15 mit Zellgrößen von 0,05 bis 2 mm.

17. Verwendung des vernetzten Polymerschaums nach einem der Ansprüche 13 bis 16 zur Verpackung oder Abdichtung von Produkten.

## Revendications

1. Procédé pour la production d'une mousse de polymère réticulé qui comprend les étapes suivantes :
(i) mélange d'un polymère avec un mélange gonflant,
(ii) mise en forme du mélange en une feuille,
(iii) réticulation de la feuille, et
(iv) transformation de la feuille en mousse,
où l'agent gonflant est incorporé en une quantité de 3 à 25 %, sur la base du poids total du polymère et de l'agent gonflant, et est composé de
(A) 5 à 40 % d'un ou plusieurs carbonates inorganiques,
(B1) 10 à 60 % d'un ou plusieurs acides polycarboxyliques et/ou sels de ceux-ci, et
(B2) 10 à 60 % d'un ou plusieurs dérivés d'acides polycarboxyliques.

2. Procédé pour la production d'une mousse de polyoléfine réticulée qui comprend les étapes suivantes :
(i) mélange d'une polyoléfine avec un mélange gonflant,
(ii) mise en forme du mélange en une feuille,
(iii) réticulation de la feuille, et
(iv) transformation de la feuille en mousse,
où l'agent gonflant est composé de
(A) 5 à 40 % d'un ou plusieurs carbonates inorganiques,
(B1) 10 à 60 % d'un ou plusieurs acides polycarboxyliques et/ou sels de ceux-ci, et
(B2) 10 à 60 % d'un ou plusieurs dérivés d'acides polycarboxyliques.

3. Procédé selon la revendication 2 où les composants (A), (B1) et (B2) sont mélangés avec la polyoléfine en une quantité de 3 à 25 % sur la base du poids total du polymère et de l'agent gonflant.

4. Procédé selon l'une quelconque des revendications 1 à 3 où le polymère est choisi dans le groupe consistant en les polymères ayant une température de fusion de 130°C ou moins et les polyoléfines.

5. Procédé selon la revendication 4 où la polyoléfine est choisie dans le groupe consistant en le polyéthylène et les copolymères d'éthylène.

6. Procédé selon l'une quelconque des revendications précédentes où le mélange est formé par extrusion, malaxage ou calandrage du mélange en une feuille à une température de 130°C ou moins.

7. Procédé selon l'une quelconque des revendications précédentes où la transformation en mousse est conduite à une température de 180 à 260°C.

8. Procédé selon l'une quelconque des revendications précédentes où les composants de l'agent gonflant sont mélangés avec la polyoléfine séparément ou sous forme d'un mélange.

9. Procédé selon l'une quelconque des revendications précédentes où les carbonates inorganiques sont choisis parmi le bicarbonate de sodium, l'hydroxyl carbonate de sodium et d'aluminium et le carbonate de magnésium.

10. Procédé selon l'une quelconque des revendications précédentes où les acides polycarboxyliques et leurs sels sont choisis parmi l'acide citrique, l'acide fumarique, l'acide tartrique, l'hydrogénocitrate de sodium, le citrate de disodium et le citrate de trisodium.

11. Procédé selon l'une quelconque des revendications précédentes où les dérivés d'acides polycarboxyliques sont choisis parmi les esters, les amides, les halogénures et les anhydrides.

12. Procédé selon l'une quelconque des revendications précédentes où l'agent gonflant est incorporé en une quantité de 4 à 20%.

13. Mousse de polymère réticulé pouvant être obtenue par un procédé selon l'une quelconque des revendications 1 à 12.

14. Mousse de polymère réticulé selon la revendication 13 qui est dépourvue de semicarbazides.

15. Mousse de polymère réticulé selon la revendication 13 ou 14 ayant une masse volumique de 20 à 400 kg/m³.

16. Mousse de polymère réticulé selon l'une quelconque des revendications 13 à 15 ayant des dimensions d'alvéoles de 0,05 à 2 mm.

17. Utilisation de la mousse de polymère réticulé selon l'une quelconque des revendications 13 à 16 pour emballer ou enfermer hermétiquement des produits.
